(19) Europäisches Patentamt
European Patent Office
Office européen des brevets

(11) EP 4 023 715 A1

(12) EUROPEAN PATENT APPLICATION
published in accordance with Art. 153(4) EPC

(43) Date of publication:
06.07.2022 Bulletin 2022/27

(21) Application number: 20857844.3

(22) Date of filing: 27.08.2020

(51) International Patent Classification (IPC):
*C08L 25/04* (2006.01) *C08L 53/00* (2006.01)
*C08L 69/00* (2006.01)

(52) Cooperative Patent Classification (CPC):
C08K 5/134; C08K 5/526; C08L 25/04;
C08L 25/12; C08L 53/00; C08L 69/00

(86) International application number:
PCT/JP2020/032330

(87) International publication number:
WO 2021/039895 (04.03.2021 Gazette 2021/09)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 30.08.2019 JP 2019158919

(71) Applicant: Mitsubishi Engineering-Plastics Corporation
Tokyo 105-0021 (JP)

(72) Inventor: MAEDA, Hitomi
Hiratsuka-shi, Kanagawa 254-0016 (JP)

(74) Representative: Hoffmann Eitle
Patent- und Rechtsanwälte PartmbB
Arabellastraße 30
81925 München (DE)

# (54) POLYCARBONATE RESIN COMPOSITION, AND MOLDED PRODUCT THEREOF

(57) The present invention addresses the problem of providing: a PC resin composition which has excellent impact resistance, transparency and weather resistance, and from which a PC resin alloy that can be used in a coating-less manner can be produced; and a molded product produced from the PC resin composition. This polycarbonate resin composition contains a polycarbonate resin (A) and a styrene-based resin (B) containing no butadiene. In the polycarbonate resin composition, the content of the styrene-based resin (B) containing no butadiene is 20 parts by mass to 70 parts by mass with respect to 100 parts by mass of the polycarbonate resin (A), and the following conditions (1) to (3) are satisfied: (1) the notched Charpy value is 70 kJ/$m^2$ or higher as measured in accordance with the ISO179 standard using a 4.0 mm-thick test piece prepared from the polycarbonate resin composition based on the same standard; (2) the critical normal force is 8.0 N or higher as measured in accordance with the ISO19252 standard using a test piece prepared from the polycarbonate resin composition based on the ISO3167 (Type A1) standard; and (3) the L* value is 40 or less as measured in accordance with the JIS K7105-1 standard using a 4.0 mm-thick test piece prepared from the polycarbonate based on the ISO tensile test standard.

EP 4 023 715 A1

## Description

TECHNICAL FIELD

The present invention relates to a polycarbonate resin composition, and a molded product thereof.

BACKGROUND ART

Polycarbonate resins (PC resin) have excellent transparency, heat resistance, weather resistance, mechanical properties and electrical characteristics, and are thus widely utilized in, for example, automobile materials, aircraft materials, electric/electronic device materials, housing materials, medical device materials, and materials in other industrial fields.

Conventionally, in order to achieve a further functionality improvement and a further price reduction in such materials, polymer alloys in which a polycarbonate resin and a resin of other type are blended have been developed in a wide range of fields. For example, in the field of automobiles, alloys in which a polycarbonate resin is blended with a polystyrene or a copolymer containing styrene as a structural unit (styrene-based resin) have been widely developed, and such alloys have been actually utilized in automobile exterior materials, such as front air dams, pillars, and door mirror housings.

As the alloys in which a polycarbonate resin is blended with a styrene-based resin, for example, for the purposes of improving the flexibility, reducing the weight, and enhancing the fluidity, PC resin/ABS resin alloys in which an acrylonitrile-butadiene-styrene copolymer (ABS resin) is incorporated, as well as PC resin/styrene-based resin/silicone-based rubber alloys in which a resin obtained by graft-polymerizing a styrene-based resin, such as an acrylonitrile-styrene copolymer (AS resin) obtained by removing a butadiene moiety from an ABS resin, with a silicone-based elastomer is incorporated, have been used.

With regard to the PC resin/ABS resin alloys, Patent Document 1 discloses that a PC resin/ABS alloy having excellent mechanical properties and plating adhesive strength can be obtained by incorporating a specific copolymer, such as a copolymer produced by polymerizing a conjugated diene rubber, an aromatic vinyl compound and a vinyl cyanide compound, into a PC resin/ABS resin alloy resin composition.

Patent Document 2 discloses that a PC resin/ABS alloy in which properties such as the fluidity during injection molding and the impact resistance are improved while maintaining the moldability, heat resistance and the like can be obtained by incorporating an alkyl ketene dimer having a specific structure into a PC resin/ABS resin alloy resin composition.

With regard to the PC resin/styrene-based resin/silicone-based rubber alloys, Patent Document 3 discloses that a PC resin/styrene-based resin/silicone-based rubber alloy having excellent stability of mechanical performance can be obtained by using a resin composition which contains a polycarbonate resin, a styrene-acrylonitrile-glycidyl methacrylate terpolymer as a styrene-based resin, and a silicone-acrylic rubber as a silicone-based rubber.

RELATED ART DOCUMENTS

PATENT DOCUMENTS

Patent Document 1: WO 2017/078273
Patent Document 2: Japanese Laid-open Patent Application (Kokai) No. 2015-78284
Patent Document 3: Japanese Laid-open Patent Application (Kokai) No. 2013-147651

SUMMARY OF THE INVENTION

PROBLEMS TO BE SOLVED BY THE INVENTION

Exterior materials and the like of automobiles are required to have various properties and, particularly, they are demanded to have excellent impact resistance, transparency, and weather resistance. Usually, when these properties are not sufficient, it is necessary to perform a coating treatment on the surface with other material so as to compensate the insufficient properties and to inhibit deterioration of the properties. When such coating is indispensable, there are problems of, for example, an increase in the production cost of an end product and a reduction in the productivity; therefore, it is desired to develop a material that can be used in a coating-less manner.

However, in conventional PC resin alloy materials such as the above-described PC resin/ABS resin alloys and

PC resin/styrene-based resin/silicone-based rubber alloys, it is difficult to simultaneously satisfy all of the above-described plural properties, and a further improvement is thus desired.

Accordingly, an object of the present invention is to provide: a PC resin composition which has excellent impact resistance, transparency and weather resistance, and from which a PC resin alloy that can be used in a coating-less manner can be produced; and a molded product produced from the PC resin composition.

MEANS FOR SOLVING THE PROBLEMS

In view of the above-described circumstances, the present inventors conducted intensive studies and consequently discovered that deterioration of the above-described plural properties, particularly transparency and weather resistance, is affected by a butadiene moiety which is an ABS resin-derived structural unit in a PC resin/ABS resin alloy, or by a silicone-based rubber moiety in a PC resin/styrene-based resin/silicone-based rubber alloy; and that the above-described problems can be solved by incorporating an acrylonitrile-styrene copolymer (AS resin) and an acrylic block copolymer into a PC resin, thereby completing the present invention.

[A1] A polycarbonate resin composition, containing:

a polycarbonate resin (A); and
a styrene-based resin (B) containing no butadiene,
wherein
the content of the styrene-based resin (B) containing no butadiene is 20 parts by mass to 70 parts by mass with respect to 100 parts by mass of the polycarbonate resin (A), and
the following conditions (1) to (3) are satisfied:

(1) the notched Charpy value is 70 $kJ/m^2$ or higher as measured in accordance with the ISO179 standard using a 4.0 mm-thick test piece prepared from the polycarbonate resin composition based on the same standard;
(2) the critical normal force is 8.0 N or higher as measured in accordance with the ISO19252 standard using a test piece prepared from the polycarbonate resin composition based on the ISO3167 (Type A1) standard; and
(3) the L* value is 40 or less as measured in accordance with the JIS K7105-1 standard using a 4.0 mm-thick test piece prepared from the polycarbonate based on the ISO tensile test standard.

[A2] The composition according to [A1], further containing an acrylic block copolymer (C) in an amount of 4 parts by mass to 20 parts by mass with respect to 100 parts by mass of the polycarbonate resin (A).
[A3] The composition according to [A1] or [A2], wherein a cured product thereof at a thickness of 2.0 mm has a ΔYI value of 30 or less after weathering discoloration based on JIS K7105.
[A4] The polycarbonate resin composition according to [A2] or [A3], wherein the acrylic block copolymer (C) is a methacrylate-acrylate-methacrylate triblock copolymer.
[A5] The polycarbonate resin composition according to any one of [A2] to [A4], wherein the content of an alkyl acrylate in the acrylic block copolymer (C) is not less than 50% by mass.
[A6] The polycarbonate resin composition according to any one of [A2] to [A5], wherein the content of the acrylic block copolymer (C) is, in terms of mass ratio, 0.05 to less than 1 with respect to the content of the styrene-based resin (B).
[A7] The polycarbonate resin composition according to any one of [A1] to [A6], wherein the styrene-based resin (B) is an acrylonitrile-styrene resin.
[A8] The polycarbonate resin composition according to any one of [A2] to [A7], wherein the acrylic block copolymer (C) has a weight-average molecular weight of 50,000 to 200,000.
[A9] The polycarbonate resin composition according to any one of [A2] to [A8], wherein the acrylic block copolymer (C) contains a structural unit represented by the following Formula (C-1) and a structural unit represented by the following Formula (C-2):

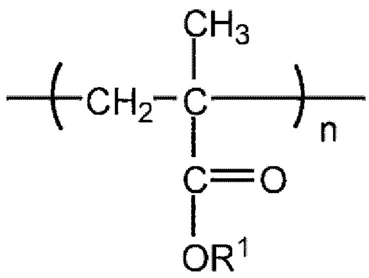

(C-1)

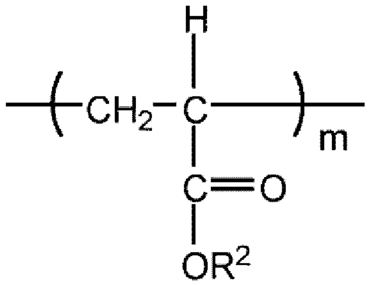

(C-2)

(in Formula (C-1), $R^1$ represents a hydrocarbon group having 1 to 10 carbon atoms, and n represents 10 to 1,000; in Formula (C-2), $R^2$ represents a hydrocarbon group having 1 to 10 carbon atoms, and m represents 10 to 2,000; and
the carbon atoms in $R^1$ and $R^2$ are each optionally substituted with an oxygen atom, a nitrogen atom, or a sulfur atom, and the hydrogen atoms bound to the carbon atoms in $R^1$ and $R^2$ are each optionally substituted with a halogen group).

[A10] The polycarbonate resin composition according to [A9], wherein the structural unit (C-1) has a glass transition temperature of 100°C to 120°C, and the structural unit (C-2) has a glass transition temperature of -50°C to -40°C.
[A11] A molded product, containing the resin composition according to any one of [A1] to [A10].
[A12] The molded product according to [A11], which is an interior member for a vehicle or an exterior member for a vehicle.

[B1] A polycarbonate resin composition, containing:

a polycarbonate resin (A);
a styrene-based resin (B); and
an acrylic block copolymer (C)
wherein
the styrene-based resin (B) contains substantially no butadiene structure, and
the content of the styrene-based resin (B) and that of the acrylic block copolymer (C) are 20 parts by mass to 70 parts by mass and 4 parts by mass to 20 parts by mass, respectively, with respect to 100 parts by mass of the polycarbonate resin (A).

[B2] The polycarbonate resin composition according to [B1], wherein the content of the acrylic block copolymer (C) is, in terms of mass ratio, 0.05 to less than 1 with respect to the content of the styrene-based resin (B).
[B3] The polycarbonate resin composition according to [B1] or [B2], wherein the styrene-based resin (B) is an acrylonitrile-styrene resin.
[B4] The polycarbonate resin composition according to any one of [B1] to [B3], wherein the acrylic block copolymer (C) has a weight-average molecular weight of 50,000 to 200,000.
[B5] The polycarbonate resin composition according to any one of [B1] to [B4], wherein the acrylic block copolymer (C) contains a structural unit (C-1) represented by the following Formula (C-1) and a structural unit (C-2) represented by the following Formula (2):

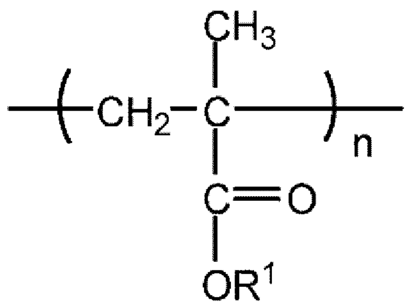

(C−1)

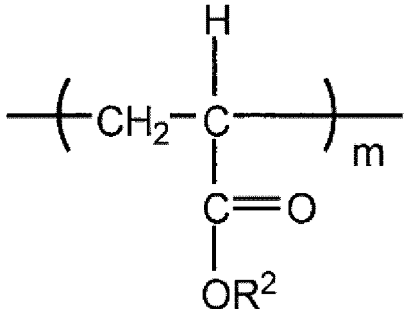

(C−2)

(in Formula (C-1), $R^1$ represents a hydrocarbon group having 1 to 10 carbon atoms, and n represents 10 to 1,000; in Formula (C-2), $R^2$ represents a hydrocarbon group having 1 to 10 carbon atoms, and m represents 10 to 2,000; and
the carbon atoms in $R^1$ and $R^2$ are each optionally substituted with an oxygen atom, a nitrogen atom, or a sulfur atom, and the hydrogen atoms bound to the carbon atoms in $R^1$ and $R^2$ are each optionally substituted with a halogen group).

[B6] The polycarbonate resin composition according to [B5], wherein the structural unit (C-1) has a glass transition temperature of 100°C to 120°C, and the structural unit (C-2) has a glass transition temperature of -50°C to -40°C.
[B7] A molded product, which is a cured product of the polycarbonate resin composition according to any one of [B1] to [B6].

EFFECTS OF THE INVENTION

According to the present invention, the followings can be provided: a PC resin composition which has excellent impact resistance, transparency and weather resistance, as well as excellent scratch resistance, and from which a PC resin alloy that can be used in a coating-less manner can be produced; and a molded product produced from the PC resin composition.

MODE FOR CARRYING OUT THE INVENTION

Embodiments of the present invention will now be described in detail; however, the following descriptions are merely examples (representative examples) of the embodiments of the present invention, and the present invention is not limited to the contents thereof as long as they do not depart from the gist of the present invention.
In the present specification, those numerical ranges stated with "to" each denote a range that includes the numerical values stated before and after "to" as the lower limit value and the upper limit value, respectively, and an expression "A to B" means a value that is A or more but B or less.

<1. Polycarbonate Resin Composition>

A first mode of the polycarbonate resin composition according to one embodiment of the present invention (hereinafter, also simply referred to as "the first mode of the polycarbonate resin composition") is a polycarbonate resin composition containing: a polycarbonate resin (A); and a styrene-based resin (B) containing no butadiene, in which the content of the styrene-based resin (B) containing no butadiene is 20 parts by mass to 70 parts by mass with respect to 100 parts by mass of the polycarbonate resin (A), and the following conditions (1) to (3) are satisfied:

(1) the notched Charpy value is 70 $kJ/m^2$ or higher as measured in accordance with the ISO179 standard using a 4.0 mm-thick test piece prepared from the polycarbonate resin composition based on the same standard;
(2) the critical normal force is 8.0 N or higher as measured in accordance with the ISO19252 standard using a test piece prepared from the polycarbonate resin composition based on the ISO3167 (Type A1) standard; and
(3) the L* value is 40 or less as measured in accordance with the JIS K7105-1 standard using a 4.0 mm-thick test piece prepared from the polycarbonate based on the ISO tensile test standard.

A second mode of the polycarbonate resin composition according to one embodiment of the present invention (hereinafter, also simply referred to as "the second mode of the polycarbonate resin composition") is a polycarbonate resin composition containing: a polycarbonate resin (A); a styrene-based resin (B); and an acrylic block copolymer (C), in which the styrene-based resin (B) contains substantially no butadiene structure, and the content of the styrene-based resin (B) containing substantially no butadiene and that of the acrylic block copolymer (C) are 20 parts by mass to 70 parts by mass and 4 parts by mass to 20 parts by mass, respectively, with respect to 100 parts by mass of the polycarbonate resin (A).

Unless otherwise specified, the term "polycarbonate resin composition (or "resin composition" or "composition") used herein encompasses both the above-described first and second modes of the polycarbonate resin composition. Further, unless otherwise specified, conditions relating to the polycarbonate resin composition (or "resin composition" or "composition") are applicable to both the above-described first and second modes of the polycarbonate resin composition.

<1-1. Polycarbonate Resin (A)>

The type of the polycarbonate resin (A) (hereinafter, also simply referred to as "polycarbonate resin") is not particularly restricted, and any polycarbonate resin may be used singly, or two or more polycarbonate resins may be used in any combination.

The polycarbonate resin (A) is a polymer which has a basic structure containing a carbonate bond represented by the following formula: -[-O-X-O-C(=O)-]-.

In this formula, X generally represents a hydrocarbon, and a hetero atom and/or a hetero bond may be introduced to X for imparting various properties.

The content of the polycarbonate resin (A) in the polycarbonate resin composition is not particularly restricted as long as it is within a range where the effects of the present invention can be obtained; however, from the standpoints of strength and fluidity, the content of the polycarbonate resin (A) is usually not less than 50% by mass, preferably not less than 55% by mass, more preferably not less than 60% by mass, but usually 95% by mass or less, preferably 90% by mass or less, more preferably 80% by mass or less.

Polycarbonate resins can be classified into aromatic polycarbonate resins in which each carbon directly bound to a carbonate bond is an aromatic carbon, and aliphatic polycarbonate resins in which each carbon directly bound to a carbonate bond is an aliphatic carbon, and any of these polycarbonate resins can be used. Thereamong, an aromatic polycarbonate resin is preferred from the standpoints of heat resistance, mechanical properties, electrical characteristics and the like.

The polycarbonate resin (A) is not restricted to a specific type, and one example thereof is a polycarbonate polymer obtained by a reaction between a dihydroxy compound and a carbonate precursor. In this process, a polyhydroxy compound and the like may be allowed to react in addition to the dihydroxy compound and the carbonate precursor. Alternatively, a method in which carbon dioxide is used as a carbonate precursor and allowed to react with a cyclic ether may be employed. The polycarbonate polymer may be linear or branched. Further, the polycarbonate polymer may be a homopolymer composed of a single kind of repeating unit, or may be a copolymer having two or more kinds of repeating units. In this case, the copolymer may be selected from a variety of copolymerization forms, such as a random copolymer and a block copolymer. The polycarbonate polymer is usually a thermoplastic resin.

Among monomers used as raw materials of the aromatic polycarbonate resins, examples of aromatic dihydroxy compounds include:

dihydroxybenzenes, such as 1,2-dihydroxybenzene, 1,3-dihydroxybenzene (i.e. resorcinol), and 1,4-dihydroxybenzene;
dihydroxybiphenyls, such as 2,5-dihydroxybiphenyl, 2,2'-dihydroxybiphenyl, and 4,4'-dihydroxybiphenyl;
dihydroxynaphthalenes, such as 2,2'-dihydroxy-1,1'-binaphthyl, 1,2-dihydroxynaphthalene, 1,3-dihydroxynaphthalene, 2,3-dihydroxynaphthalene, 1,6-dihydroxynaphthalene, 2,6-dihydroxynaphthalene, 1,7-dihydroxynaphthalene, and 2,7-dihydroxynaphthalene;
dihydroxydiaryl ethers, such as 2,2'-dihydroxydiphenyl ether, 3,3'-dihydroxydiphenyl ether, 4,4'-dihydroxydiphenyl ether, 4,4'-dihydroxy-3,3'-dimethyldiphenyl ether, 1,4-bis(3-hydroxyphenoxy)benzene, and 1,3-bis(4-hydroxyphenoxy)benzene;

bis(hydroxyaryl)alkanes, such as 2,2-bis(4-hydroxyphenyl)propane (i.e. bisphenol A), 1,1-bis(4-hydroxyphenyl)propane, 2,2-bis(3-methyl-4-hydroxyphenyl)propane, 2,2-bis(3-methoxy-4-hydroxyphenyl)propane, 2-(4-hydroxyphenyl)-2-(3-methoxy-4-hydroxyphenyl)propane, 1,1-bis(3-tert-butyl-4-hydroxyphenyl)propane, 2,2-bis(3,5-dimethyl-4-hydroxyphenyl)propane, 2,2-bis(3-cyclohexyl-4-hydroxyphenyl)propane, 2-(4-hydroxyphenyl)-2-(3-cyclohexyl-4-hydroxyphenyl)propane, $\alpha,\alpha'$-bis(4-hydroxyphenyl)-1,4-diisopropylbenzene, 1,3-bis[2-(4-hydroxyphenyl)-2-propyl]benzene, bis(4-hydroxyphenyl)methane, bis(4-hydroxyphenyl)cyclohexylmethane, bis(4-hydroxyphenyl)phenylmethane, bis(4-hydroxyphenyl)(4-propenylphenyl)methane, bis(4-hydroxyphenyl)diphenylmethane, bis(4-hydroxyphenyl)naphthylmethane, 1,1-bis(4-hydroxyphenyl)ethane, 1,1-bis(4-hydroxyphenyl)-1-phenylethane, 1,1-bis(4-hydroxyphenyl)-1-naphthylethane, 1,1-bis(4-hydroxyphenyl)butane, 2,2-bis(4-hydroxyphenyl)butane, 2,2-bis(4-hydroxyphenyl)pentane, 1,1-bis(4-hydroxyphenyl)hexane, 2,2-bis(4-hydroxyphenyl)hexane, 1,1-bis(4-hydroxyphenyl)octane, 2,2-bis(4-hydroxyphenyl)octane, 4,4-bis(4-hydroxyphenyl)heptane, 2,2-bis(4-hydroxyphenyl)nonane, 1,1-bis(4-hydroxyphenyl)decane, and 1,1-bis(4-hydroxyphenyl)dodecane;

bis(hydroxyaryl)cycloalkanes, such as 1,1-bis(4-hydroxyphenyl)cyclopentane, 1,1-bis(4-hydroxyphenyl)cyclohexane, 1,1-bis(4-hydroxyphenyl)-3,3-dimethylcyclohexane, 1,1-bis(4-hydroxyphenyl)-3,4-dimethylcyclohexane, 1,1-bis(4-hydroxyphenyl)-3,5-dimethylcyclohexane, 1,1-bis(4-hydroxyphenyl)-3,3,5-trimethylcyclohexane, 1,1-bis(4-hydroxy-3,5-dimethylphenyl)-3,3,5-trimethylcyclohexane, 1,1-bis(4-hydroxyphenyl)-3-propyl-5-methylcyclohexane, 1,1-bis(4-hydroxyphenyl)-3-tert-butyl-cyclohexane, 1,1-bis(4-hydroxyphenyl)-4-tert-butyl-cyclohexane, 1,1-bis(4-hydroxyphenyl)-3-phenylcyclohexane, and 1,1-bis(4-hydroxyphenyl)-4-phenylcyclohexane;

cardo structure-containing bisphenols, such as 9,9-bis(4-hydroxyphenyl)fluorene and 9,9-bis(4-hydroxy-3-methylphenyl)fluorene;

dihydroxydiaryl sulfides, such as 4,4'-dihydroxydiphenyl sulfide and 4,4'-dihydroxy-3,3'-dimethyldiphenyl sulfide;

dihydroxydiaryl sulfoxides, such as 4,4'-dihydroxydiphenyl sulfoxide and 4,4'-dihydroxy-3,3'-dimethyldiphenyl sulfoxide; and

dihydroxydiaryl sulfones, such as 4,4'-dihydroxydiphenyl sulfone and 4,4'-dihydroxy-3,3'-dimethyldiphenyl sulfone.

Among these compounds, bis(hydroxyaryl)alkanes are preferred, and bis(4-hydroxyphenyl)alkanes are more preferred. Particularly, from the standpoints of impact resistance and heat resistance, 2,2-bis(4-hydroxyphenyl)propane (i.e. bisphenol A) is preferred.

These aromatic dihydroxy compounds may be used singly, or two or more thereof may be used in any combination at any ratio.

Examples of monomers used as raw materials of the aliphatic polycarbonate resins include:

alkanediols, such as ethane-1,2-diol, propane-1,2-diol, propane-1,3-diol, 2,2-dimethylpropane-1,3-diol, 2-methyl-2-propylpropane-1,3-diol, butane-1,4-diol, pentane-1,5-diol, hexane-1,6-diol, and decane-1,10-diol;

cycloalkanediols, such as cyclopentane-1,2-diol, cyclohexane-1,2-diol, cyclohexane-1,4-diol, 1,4-cyclohexane dimethanol, 4-(2-hydroxyethyl)cyclohexanol, and 2,2,4,4-tetramethyl-cyclobutane-1,3-diol;

glycols, such as ethylene glycol, 2,2'-oxydiethanol (i.e. diethylene glycol), triethylene glycol, propylene glycol, and spiroglycol;

aralkyldiols, such as 1,2-benzene dimethanol, 1,3-benzene dimethanol, 1,4-benzene dimethanol, 1,4-benzene diethanol, 1,3-bis(2-hydroxyethoxy)benzene, 1,4-bis(2-hydroxyethoxy)benzene, 2,3-bis(hydroxymethyl)naphthalene, 1,6-bis(hydroxyethoxy)naphthalene, 4,4'-biphenyl dimethanol, 4,4'-biphenyl diethanol, 1,4-bis(2-hydroxyethoxy)biphenyl, bisphenol A-bis(2-hydroxyethyl)ether, and bisphenol S-bis(2-hydroxyethyl)ether; and

cyclic ethers, such as 1,2-epoxyethane (i.e. ethylene oxide), 1,2-epoxypropane (i.e. propylene oxide), 1,2-epoxycyclopentane, 1,2-epoxycyclohexane, 1,4-epoxycyclohexane, 1-methyl-1,2-epoxycyclohexane, 2,3-epoxynorbornane, and 1,3-epoxypropane.

Among monomers used as raw materials of the polycarbonate resin, examples of carbonate precursors include carbonyl halides and carbonate esters. These carbonate precursors may be used singly, or two or more thereof may be used in any combination at any ratio.

Specific examples of the carbonyl halides include: phosgene; and haloformates, such as bischloroformates of dihydroxy compounds, and monochloroformates of dihydroxy compounds.

Specific examples of the carbonate esters include: diaryl carbonates, such as diphenyl carbonate and ditolyl carbonate; dialkyl carbonates, such as dimethyl carbonate and diethyl carbonate; and carbonates of dihydroxy compounds, such as biscarbonates of dihydroxy compounds, monocarbonates of dihydroxy compounds, and cyclic carbonates.

[Method of Producing Polycarbonate Resin (A)]

A method of producing the polycarbonate resin (A) is not particularly restricted, and any method can be employed. Examples thereof include an interfacial polymerization method, a melt transesterification method, a pyridine method, a cyclic carbonate compound ring-opening polymerization method, and a prepolymer solid-phase transesterification method.

Among these methods, particularly preferred ones are concretely described below.

[Interfacial Polymerization Method]

First, a case of producing the polycarbonate resin by an interfacial polymerization method will be described.

In an interfacial polymerization method, a dihydroxy compound and a carbonate precursor (preferably phosgene) are allowed to react with each other in the presence of an organic solvent inert to the reaction and an aqueous alkali solution, usually with the pH being maintained at 9 or higher, and interfacial polymerization is subsequently carried out in the presence of a polymerization catalyst to obtain the polycarbonate resin. In the reaction system, as required, a molecular weight modifier (chain terminator) may be included and, in order to inhibit the oxidation of the dihydroxy compound, an antioxidant may be included as well.

The dihydroxy compound and the carbonate precursor are as described above. Among carbonate precursors, phosgene is preferably used, and a method using phosgene is specifically called "phosgene method".

Examples of the organic solvent inert to the reaction include: chlorinated hydrocarbons, such as dichloromethane, 1,2-dichloroethane, chloroform, monochlorobenzene, and dichlorobenzene; and aromatic hydrocarbons, such as benzene, toluene, and xylene. These organic solvents may be used singly, or two or more thereof may be used in any combination at any ratio.

Examples of an alkali compound contained in the aqueous alkali solution include: alkali metal compounds, such as sodium hydroxide, potassium hydroxide, lithium hydroxide and sodium bicarbonate; and alkaline earth metal compounds, among which sodium hydroxide and potassium hydroxide are preferred. These alkali compounds may be used singly, or two or more thereof may be used in any combination at any ratio.

The concentration of the alkali compound in the aqueous alkali solution is not restricted; however, the alkali compound is usually used in an amount of 5 to 10% by mass so as to control the pH of the aqueous alkali solution to be 10 to 12 during the reaction. For example, in a case where phosgene is blown into the reaction system, in order to control the pH of an aqueous phase to be 10 to 12, preferably 10 to 11, it is preferred to adjust the molar ratio of the bisphenol compound and the alkali compound to be usually 1:1.9 or higher, particularly 1:2.0 or higher, but usually 1:3.2 or lower, particularly 1:2.5 or lower.

Examples of the polymerization catalyst include: aliphatic tertiary amines, such as trimethylamine, triethylamine, tributylamine, tripropylamine, and trihexylamine; alicyclic tertiary amines, such as *N*,*N*'-dimethylcyclohexylamine and *N*,*N*'-diethylcyclohexylamine; aromatic tertiary amines, such as *N*,*N*'-dimethylaniline and *N*,*N*'-diethylaniline; quaternary ammonium salts, such as trimethylbenzyl ammonium chloride, tetramethyl ammonium chloride, and triethylbenzyl ammonium chloride; pyridine; guanine; and salts of guanidine. These polymerization catalysts may be used singly, or two or more thereof may be used in any combination at any ratio.

Examples of the molecular weight modifier include: aromatic phenols having a monohydric phenolic hydroxy group; aliphatic alcohols, such as methanol and butanol; mercaptan; and phthalic acid imide, among which aromatic phenols are preferred. Specific examples of the aromatic phenols include: alkyl group-substituted phenols, such as m-methyl phenol, p-methyl phenol, *m*-propyl phenol, *p*-propyl phenol, *p*-tert-butyl phenol, and *p*-long-chain-alkyl-substituted phenols; vinyl group-containing phenols, such as isopropanyl phenol; epoxy group-containing phenols; and carboxyl group-containing phenols, such as o-hydroxybenzoic acid and 2-methyl-6-hydroxyphenylacetic acid. These molecular weight modifiers may be used singly, or two or more thereof may be used in any combination at any ratio.

The amount of the molecular weight modifier to be used is usually not less than 0.5 moles, preferably not less than 1 mole, but usually 50 moles or less, preferably 30 moles or less, with respect to 100 moles of the dihydroxy compound. By using the molecular weight modifier in this range, the thermal stability and the hydrolysis resistance of the resin composition can be improved.

In the reaction, a reaction substrate, a reaction medium, a catalyst, an additive and the like may be mixed in any order as long as the desired polycarbonate resin can be obtained, and an appropriate order may be set arbitrarily. For example, when phosgene is used as the carbonate precursor, a molecular weight modifier may be mixed at any point between the reaction of the dihydroxy compound with phosgene (phosgenation) and the start of the polymerization reaction.

The reaction temperature is usually 0 to 40°C, and the reaction time is usually several minutes (e.g., 10 minutes) to several hours (e.g., 6 hours).

[Melt Transesterification Method]

Next, a case of producing the polycarbonate resin by a melt transesterification method will be described.

In a melt transesterification method, a transesterification reaction is carried out between, for example, a carbonic acid diester and a dihydroxy compound.

The dihydroxy compound is as described above.

Meanwhile, examples of the carbonic acid diester include: dialkyl carbonate compounds, such as dimethyl carbonate, diethyl carbonate, and di-*tert*-butyl carbonate; diphenyl carbonate; and substituted diphenyl carbonates, such as ditolyl carbonate. Thereamong, diphenyl carbonate and substituted diphenyl carbonates are preferred, and diphenyl carbonate is particularly preferred. These carbonic acid diesters may be used singly, or two or more thereof may be used in any combination at any ratio.

The dihydroxy compound and the carbonic acid diester may be used at any ratio as long as the desired polycarbonate resin can be obtained; however, the carbonic acid diester is used preferably in an equimolar amount or more, particularly preferably in an amount of 1.01 moles or more, with respect to 1 mole of the dihydroxy compound. An upper limit is usually 1.30 moles or less. By setting the amount of the carbonic acid diester in this range, the amount of terminal hydroxy groups can be adjusted in a preferred range.

In a polycarbonate resin, the amount of its terminal hydroxy groups tends to have a large effect on the thermal stability, the hydrolysis stability, the color tone and the like. Accordingly, the amount of terminal hydroxy groups may be adjusted as required by any known method. In the transesterification reaction, usually, a polycarbonate resin having an adjusted amount of terminal hydroxy groups can be obtained by adjusting, for example, the mixing ratio of the carbonic acid diester and the aromatic dihydroxy compound, and/or the degree of pressure reduction during the transesterification reaction. By this operation, usually, the molecular weight of the resulting polycarbonate resin can be adjusted as well.

In the case of adjusting the amount of terminal hydroxy groups by adjusting the mixing ratio of the carbonic acid diester and the dihydroxy compound, the mixing ratio is as described above.

Examples of a more active adjustment method include a method of separately mixing a chain terminator during the reaction. Examples of the chain terminator used in this method include monohydric phenols, monobasic carboxylic acids, and carbonic acid diesters. These chain terminators may be used singly, or two or more thereof may be used in any combination at any ratio.

In the production of a polycarbonate resin by the melt transesterification method, a transesterification catalyst is usually used. Any transesterification catalyst can be used. Particularly, it is preferred to use, for example, an alkali metal compound and/or an alkaline earth metal compound. In addition, a basic compound, such as a basic boron compound, a basic phosphorus compound, a basic ammonium compound, or an amine compound, may be supplementarily used in combination. These transesterification catalysts may be used singly, or two or more thereof may be used in any combination at any ratio.

In the melt transesterification method, the reaction temperature is usually 100 to 320°C. The pressure during the reaction is usually a reduced pressure of not higher than 2 mmHg. As a specific operation, a melt polycondensation reaction may be carried out under the above-described conditions while removing by-products, such as an aromatic hydroxy compound.

The melt polycondensation reaction may be carried out by either a batchwise method or a continuous method. When the melt polycondensation reaction is carried out in a batchwise manner, a reaction substrate, a reaction medium, a catalyst, an additive and the like may be mixed in any order as long as the desired polycarbonate resin can be obtained, and an appropriate order may be set arbitrarily. However, taking into consideration the stability and the like of the resulting polycarbonate resin, the melt polycondensation reaction is preferably carried out in a continuous manner.

In the melt transesterification method, a catalyst deactivator may be used as required. As the catalyst deactivator, any compound that neutralizes the transesterification catalyst can be used. Examples thereof include sulfur-containing acidic compounds and derivatives thereof. These catalyst deactivators may be used singly, or two or more thereof may be used in any combination at any ratio.

The amount of the catalyst deactivator to be used is usually not less than 0.5 equivalents, preferably not less than 1 equivalent, but usually 10 equivalents or less, preferably 5 equivalents or less, with respect to an alkali metal or alkaline earth metal contained in the transesterification catalyst. Further, the amount of the catalyst deactivator to be used is usually not less than 1 ppm but usually 100 ppm or less, preferably 20 ppm or less, with respect to the resulting polycarbonate resin.

The molecular weight of the polycarbonate resin (A), which is determined in terms of viscosity-average molecular weight (Mv) calculated from the solution viscosity measured at a temperature of 20°C using methylene chloride as a solvent, is not particularly restricted; however, it is usually 10,000 or higher, preferably 15,000 or higher, but usually 30,000 or less, preferably 25,000 or less, more preferably 22,000 or less.

By controlling the viscosity-average molecular weight to be not less than the lower limit value of the above-described range, the mechanical strength of a molded product of the polycarbonate resin composition can be further

improved and, by controlling the viscosity-average molecular weight to be not higher than the upper limit value of the above-described range, a reduction in the fluidity of the polycarbonate resin composition can be inhibited and the moldability is thereby improved, so that thin-wall molding can be easily performed.

Two or more kinds of polycarbonate resins having different viscosity-average molecular weights may be used in combination and, in this case, polycarbonate resins each having a viscosity-average molecular weight value outside the above-described preferred range may be mixed.

The "viscosity-average molecular weight [Mv]" means a value determined by measuring the intrinsic viscosity [η] (unit: dl/g) at a temperature of 20°C using an Ubbelohde viscometer with methylene chloride as a solvent, and applying the measured value to the Schnell's viscosity equation, namely $\eta = 1.23 \times 10^{-4}\ Mv^{0.83}$. The intrinsic viscosity [η] is a value determined by measuring the specific viscosity [$\eta_{sp}$] at respective solution concentrations [C] (g/dl) and applying the measured values to the following equation.

$$\eta = \lim_{c \to 0} \eta_{sp} / \mathrm{c}$$

The terminal hydroxy group concentration of the polycarbonate resin (A) is not particularly restricted and may be selected as appropriate; however, it is usually 1,000 ppm or lower, preferably 800 ppm or lower, more preferably 600 ppm or lower. By this, the residence heat stability and the color tone of the polycarbonate resin can be further improved. Particularly for a polycarbonate resin produced by the melt transesterification method, a lower limit of the terminal hydroxy group concentration is usually 10 ppm or higher, preferably 30 ppm or higher, more preferably 40 ppm or higher. By this, a reduction in the molecular weight can be inhibited, and the mechanical properties of the resin composition can be further improved.

As for the unit of the terminal hydroxy group concentration, the mass of terminal hydroxy groups with respect to the mass of the polycarbonate resin is expressed in ppm. As a method of measuring the terminal hydroxy group concentration, colorimetry based on a titanium tetrachloride/acetic acid method (the method described in Macromol. Chem. 88, 215 (1965)) is employed.

The polycarbonate resin may be used in the form of a polycarbonate resin by itself (the phrase "polycarbonate resin by itself" is not limited to a mode of containing only a single kind of polycarbonate resin and encompasses, for example, a mode of containing plural kinds of polycarbonate resins having different monomer compositions and molecular weights from each other), or may be used in combination with an alloy (mixture) of a polycarbonate resin and other thermoplastic resin. Further, the polycarbonate resin may be configured as a copolymer mainly composed of a polycarbonate resin, for example, a copolymer of a polycarbonate resin with an oligomer or polymer having a siloxane structure, which copolymer is used for the purpose of further improving the flame retardancy and the impact resistance; a copolymer of a polycarbonate resin with a monomer, oligomer, or polymer containing a phosphorus atom, which copolymer is used for the purpose of further improving the thermal oxidative stability and the flame retardancy; a copolymer of a polycarbonate resin with a monomer, oligomer, or polymer having a dihydroxyanthraquinone structure, which copolymer is used for the purpose of improving the thermal oxidative stability; a copolymer of a polycarbonate resin with an oligomer or polymer having an olefin structure such as polystyrene, which copolymer is used for the purpose of improving the optical properties; or a copolymer of a polycarbonate resin with a polyester resin oligomer or polymer, which copolymer is used for the purpose of improving the chemical resistance.

In order to improve the outer appearance of a molded product and enhance the fluidity, the polycarbonate resin may contain a polycarbonate oligomer. This polycarbonate oligomer has a viscosity-average molecular weight [Mv] of usually 1,500 or higher, preferably 2,000 or higher, but usually 9,500 or less, preferably 9,000 or less. The content of the polycarbonate oligomer is preferably 30% by mass or less of the polycarbonate resin (including the polycarbonate oligomer).

Further, the polycarbonate resin may contain not only a virgin material but also a polycarbonate resin regenerated from a used product (so-called material-recycled polycarbonate resin).

In the polycarbonate resin, the content of the regenerated polycarbonate resin is preferably 80% by mass or less, particularly preferably 50% by mass or less. This is because it is highly likely that the regenerated polycarbonate resin has been deteriorated through thermal deterioration, aged deterioration or the like and, therefore, the use of such a polycarbonate resin in an amount greater than the above-described range can deteriorate the hue and the mechanical properties.

<1-2. Styrene-Based Resin (B)>

The styrene-based resin (B) (hereinafter, also simply referred to as "styrene-based resin") is not particularly

restricted as long as it contains substantially no butadiene structural unit, and such a styrene-based resin may be used singly, or two or more thereof may be used in any combination.

The styrene-based resin contains substantially no butadiene structural unit, and preferably contains substantially no double bond in the main chain skeleton. This is because the molecular chain of a structure containing a double bond in its main chain, such as butadiene, is likely to be cleaved by oxygen, ozone, UV light, or heat, and this makes deterioration (e.g., cracking, hardening, or discoloration) of a molded product having such a structure more likely to occur. In other words, from the standpoint of improving the weather resistance and the like, the amount of a structure containing a double bond in its main chain, such as butadiene, is preferably as small as possible.

The expression "contain substantially no butadiene structural unit" used herein means that a butadiene structural unit may be contained within a range where the effects of the present invention can be obtained. When measured in terms of styrene by gel permeation chromatography using tetrahydrofuran as a solvent, the amount of detected butadiene structural unit is preferably 1% by mass or less, more preferably a detection limit or less, in terms of the content in the polycarbonate resin composition. Similarly, the expression "contain substantially no double bond in the main chain skeleton" means that the main chain skeleton may contain double bonds within a range where the effects of the present invention can be obtained.

From the standpoint of improving the impact resistance, the transparency and the weather resistance, the content of the styrene-based resin in the polycarbonate resin composition is not particularly restricted as long as it is 20 parts by mass to 70 parts by mass with respect to 100 parts by mass of the above-described polycarbonate resin; however, it is preferably not less than 25 parts by mass, more preferably not less than 35 parts by mass, but preferably 60 parts by mass or less, more preferably 45 parts by mass or less.

When the content of the styrene-based resin exceeds the upper limit value of the above-described range, the impact resistance is deteriorated, whereas when the content of the styrene-based resin is less than the lower limit value of the above-described range, the fluidity is reduced.

The type of the styrene-based resin is not particularly restricted, and examples thereof include polystyrenes, acrylonitrile-styrene copolymers (AS resins), and acrylonitrile-styrene-acrylate copolymers (ASA resins). From the standpoint of transparency, the styrene-based resin is preferably an acrylonitrile-styrene copolymer.

The acrylonitrile-styrene copolymer is a thermoplastic copolymer obtained by copolymerization of a vinyl cyanide compound and an aromatic vinyl compound. Examples of the vinyl cyanide compound include vinyl cyan compounds such as acrylonitrile and methacrylonitrile, and acrylonitrile is particularly preferred. Examples of the aromatic vinyl compound include styrene and styrene derivatives, such as styrene, $\alpha$-methylstyrene, *p*-methylstyrene, vinylxylene, dimethyl styrene, *p*-*t*-butylstyrene, bromostyrene, and dibromostyrene, among which styrene is preferred. These compounds may be used singly, or two or more thereof may be used in combination.

With regard to preferred ratios of the respective structural units derived from the vinyl cyanide compound and the aromatic vinyl compound in the acrylonitrile styrene copolymer, the ratio of structural unit derived from the vinyl cyanide compound is 10 to 40% by mass, more preferably 15 to 30% by mass, and the ratio of structural unit derived from the aromatic vinyl compound is 90 to 60% by mass, more preferably 85 to 70% by mass, taking the whole acrylonitrile-styrene copolymer as 100% by mass. At the time of the copolymerization, other copolymerizable vinyl compound may be mixed with these vinyl compounds. As for the mixing ratio of these compounds, the content of structural unit derived from the other vinyl compound is preferably 15% by mass or less in the resulting acrylonitrile-styrene copolymer. Further, in the copolymerization reaction, any known initiator, chain transfer agent, and the like can be used as required.

A method of producing the styrene-based resin is not particularly restricted, and any known method can be employed. Examples thereof include emulsion polymerization, solution polymerization, bulk polymerization, suspension polymerization, and bulk-suspension polymerization, and the styrene-based resin may be produced by any of these methods, or a commercially available product may be used.

The melt flow rate (MFR) of the styrene-based resin, which reflects the molecular weight, is preferably 5 to 50 g/10 min, more preferably 10 to 30 g/10 min, at a temperature of 220°C and a load of 10 kg.

As the acrylonitrile-styrene copolymer, a wide range of commercially available AS resins and SAN resins can be used.

<1-3. Acrylic Block Copolymer (C)>

The acrylic block copolymer (C) (hereinafter, also simply referred to as "acrylic block copolymer") is not particularly restricted, and may be used singly, or two or more thereof may be used in any combination. The acrylic block copolymer is an indispensable component in the second mode of the polycarbonate resin composition but not in the first mode; however, from the standpoint of improving the impact resistance, the transparency, the weather resistance and the scratch resistance, the acrylic block copolymer is preferably also contained in the polycarbonate resin composition of the first mode.

A block copolymer resin has at least two or more different structural units and, therefore, can be imparted with

various properties by an arbitrary combination of structural units having different properties. For example, the flexibility can be improved by increasing the ratio of a structural unit (soft block) having a low glass transition temperature. Particularly, since the styrene-based resin according to the present embodiment contains substantially no butadiene structural unit that can improve the flexibility, a large effect is obtained by introducing a soft block as a structural unit of the acrylic block copolymer. Conversely, the rigidity can be improved by increasing the ratio of a structural unit (hard block) having a high glass transition temperature.

From the standpoint of improving the impact resistance, the transparency and the weather resistance, the content of the acrylic block copolymer in the polycarbonate resin composition is usually not less than 4 parts by mass, preferably not less than 5 parts by mass, but usually 20 parts by mass or less, preferably 15 parts by mass or less, more preferably 10 parts by mass or less, with respect to 100 parts by mass of the above-described polycarbonate resin. In the second mode of the polycarbonate resin composition, from the standpoint of improving the impact resistance, the transparency, the weather resistance and the scratch resistance, the content of the acrylic block copolymer is 4 parts by mass to 20 parts by mass.

When the content of the acrylic block copolymer exceeds the upper limit value of the above-described range, the transparency is deteriorated and the rigidity is reduced due to softening, whereas when the content of the acrylic block copolymer is less than the lower limit value of the above-described range, the impact resistance is not exerted.

The content of the acrylic block copolymer with respect to the content of the styrene-based resin is not particularly restricted; however, from the standpoint of the balance between the fluidity and the impact resistance, it is usually 0.05 or higher, preferably 0.1 or higher, more preferably 0.15 or higher, but usually lower than 1, preferably 0.5 or lower, more preferably 0.3 or lower, in terms of mass ratio.

The weight-average molecular weight (Mw) of the acrylic block copolymer is also not particularly restricted; however, from the standpoints of the transparency and the impact resistance, it is usually not less than 50,000, preferably not less than 60,000, more preferably not less than 80,000, still more preferably not less than 95,000, but usually 200,000 or less, preferably 150,000 or less, more preferably 120,000 or less, still more preferably 100,000 or less.

The weight-average molecular weight (Mw) is a molecular weight measured in terms of polystyrene by gel permeation chromatography using tetrahydrofuran as a solvent.

The types of structural units constituting the acrylic block copolymer are not particularly restricted, and examples thereof include: alkyl acrylates, such as methyl acrylate, ethyl acrylate, *n*-propyl acrylate, and *n*-butyl acrylate; and alkyl methacrylates, such as methyl methacrylate, ethyl methacrylate, dodecyl methacrylate, *n*-butyl methacrylate, and *i*-butyl methacrylate. The acrylic block copolymer preferably contains a structural unit (C-1) represented by the following Formula (C-1) or a structural unit (C-2) represented by the following Formula (2), more preferably contains both of these structural units.

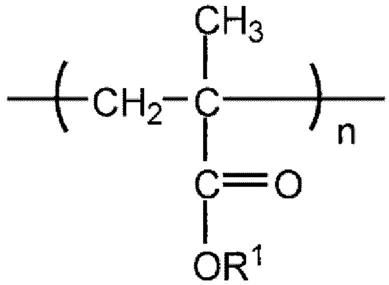

(C−1)

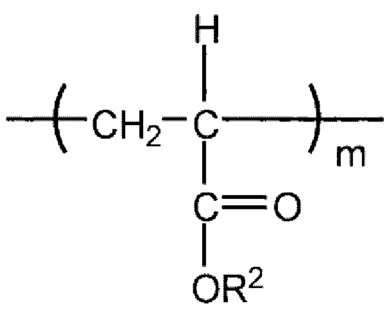

(C−2)

In Formula (C-1), $R^1$ is a hydrocarbon group having 1 to 10 carbon atoms, preferably a hydrocarbon group having 1 to 6 carbon atoms, more preferably a hydrocarbon group having 1 to 4 carbon atoms, still more preferably a hydrocarbon group having 1 to 2, particularly preferably a hydrocarbon group having 1 carbon atom (methyl group); and

n is 10 to 1,000.

In Formula (C-2), $R^2$ is a hydrocarbon group having 1 to 10 carbon atoms, preferably a hydrocarbon group having 1 to 6 carbon atoms, more preferably a hydrocarbon group having 1 to 4 carbon atoms, particularly preferably a hydrocarbon group having 4 carbon atoms (butyl group); and m is 10 to 2,000.

The carbon atoms in $R^1$ and $R^2$ are each optionally substituted with an atom other than carbon, specifically an oxygen atom, a nitrogen atom, or a sulfur atom, within a range where the effects of the present invention can be obtained.

Further, the hydrogen atoms bound to the carbon atoms in $R^1$ and $R^2$ are each optionally substituted with a halogen group.

Moreover, the above-described structural units (C-1) and (C-2) may each be used singly, or two or more thereof may be used in any combination at any ratio.

From the standpoint of improving the transparency, the content of the structural unit (C-1) in the acrylic block copolymer (the content of an alkyl methacrylate when none of the hydrogen atoms bound to the carbon atoms of $R^1$ in the structural unit (C-1) is substituted with other element) is, in terms of mass ratio, usually 10% by mass or higher, preferably 15% by mass or higher, more preferably 20% by mass or higher, but usually 50% by mass or lower, preferably 40% by mass or lower, more preferably 35% by mass or lower.

From the standpoint of improving the transparency, the content of the structural unit (C-2) in the acrylic block copolymer (the content of an alkyl acrylate when none of the hydrogen atoms bound to the carbon atoms of $R^2$ in the structural unit (C-2) is substituted with other element) is, in terms of mass ratio, usually 50% by mass or higher, preferably 60% by mass or higher, more preferably 65% by mass or higher, but usually 90% by mass or lower, preferably 88% by mass or lower, more preferably 85% by mass or lower.

Further, the copolymerization sequence of the acrylic block copolymer is not particularly restricted; however, from the standpoint of improving the impact resistance, the transparency, the weather resistance and the scratch resistance, the acrylic block copolymer is preferably a methacrylate (block)-acrylate (block)-methacrylate (block) triblock copolymer. The methacrylate block is a block represented by the above-described structural unit (C-1), and the acrylate block is a block represented by the above-described structural unit (C-2).

The glass transition temperature of the structural unit (C-1) is preferably 100°C or higher but preferably 120°C or lower.

The glass transition temperature of the structural unit (C-2) is preferably -50°C or higher but preferably -40°C or lower.

The glass transition temperature can be measured by any known measurement method.

A method of producing the acrylic block copolymer is not particularly restricted, and any known method can be employed. Examples thereof include emulsion polymerization, solution polymerization, bulk polymerization, suspension polymerization, and bulk-suspension polymerization, and the acrylic block copolymer may be produced by any of these methods, or a commercially available product may be used.

The melt flow rate (MFR) of the acrylic block copolymer, which reflects the molecular weight, is preferably 1 to 40 g/10 min, more preferably 3 to 25 g/10 min, at a temperature of 190°C and a load of 2.16 kg.

<1-4. Other Resins>

Within a range where the effects of the present invention can be obtained, the polycarbonate resin composition may also contain a resin (hereinafter, also referred to as "other resin") in addition to the above-described polycarbonate resin, styrene-based resin, and acrylic block copolymer, and examples thereof include the below-described resins. Other resin may be incorporated singly, or two or more thereof may be incorporated in any combination at any ratio.

Examples of the other resin include: thermoplastic polyester resins, such as polyethylene terephthalate resins (PET resins), polytrimethylene terephthalate resins (PTT resins), and polybutylene terephthalate resins (PBT resins); polyolefin resins, such as polyethylene resins (PE resins), polypropylene resins (PP resins), cyclic cycloolefin resins (COP resins), and cyclic cycloolefin copolymer (COP) resins; polyamide resins (PA resins); polyimide resins (PI resins); polyether imide resins (PEI resins); polyurethane resins (PU resins); polyphenylene ether resins (PPE resins); polyphenylene sulfide resins (PPS resins); polysulfone resins (PSU resins); and polymethacrylate resins (PMMA resins).

The content of the other resin in the polycarbonate resin composition is not particularly restricted; however, from the standpoints of the fluidity and the impact resistance, it is usually not less than 20 parts by mass, preferably not less than 40 parts by mass, but usually 90 parts by mass or less, preferably 70 parts by mass or less, more preferably 50 parts by mass or less, in terms of mass ratio.

<1-5. Other Components>

Within a range where the effects of the present invention can be obtained, the polycarbonate resin composition may also contain a component (hereinafter, also referred to as "other component") in addition to the above-described

polycarbonate resin, styrene-based resin, acrylic block copolymer, and other resin, and examples of the other component include a stabilizer, an antioxidant, a mold release agent, a lubricant, a filler, a flame retardant, an ultraviolet absorber, a dye/pigment, an antistatic agent, an antifogging agent, an antiblocking agent, a fluidity improver, a plasticizer, a dispersant, and an antimicrobial agent.

In the polycarbonate resin composition, these other components may be incorporated singly, or two or more thereof may be incorporated in any combination at any ratio.

<2. Molded Product>

The molded product according to another embodiment of the present invention (hereinafter, also simply referred to as "molded product") is a molded product produced from the above-described polycarbonate resin composition. It can be described that the molded product is composed of the polycarbonate resin composition when the polycarbonate resin composition does not contain any solvent, or it can be described that the molded product is a cured product of the polycarbonate resin composition when the polycarbonate resin composition contains a solvent. The molded product composed of the polycarbonate resin composition can be obtained by, as described below, an injection molding method, a compression molding method, or an injection compression molding method. Meanwhile, when the polycarbonate resin composition contains a solvent, the polycarbonate resin composition can be molded while removing the solvent by heating at a temperature at which at least the solvent is removed. The polycarbonate resin composition is usually a thermoplastic melt-moldable composition that is solid at normal temperature.

The shape of the molded product is not particularly restricted and can be selected as appropriate in accordance with the intended use and purpose of the molded product. Examples of the shape include a placoid shape, a plate shape, a rod shape, a sheet shape, a film shape, a cylindrical shape, a ring shape, a circular shape, an elliptical shape, a polygonal shape, an irregular shape, a hollow shape, a frame shape, a box shape, and a panel shape.

A method of molding the molded product is not particularly restricted as long as the resin composition can be molded, and any known method may be employed. Examples thereof include an injection molding method, a compression molding method, and an injection compression molding method, among which an injection molding method is preferred.

<Impact Resistance>

The impact resistance of the molded product is not particularly restricted, and can be modified as appropriate in accordance with the intended use and, for example, when the molded product is used as an interior material (member) or exterior material (member) of a vehicle (particularly an automobile), the impact resistance is usually 60 kJ/$m^2$ or higher, preferably 70 kJ/$m^2$ or higher, more preferably 100 kJ/$m^2$ or higher, still more preferably 150 kJ/$m^2$ or higher, but usually 300 kJ/$m^2$ or lower. Particularly, when the molded product is a cured product of the polycarbonate resin composition of the first mode, from the standpoint of ensuring sufficient performance as both an interior member and an exterior material of an automobile, the impact resistance of the molded product is 70 kJ/$m^2$ or higher in the above-described application. The impact resistance can be improved by increasing the viscosity of the polycarbonate.

In the present specification, the impact resistance is defined as a value obtained by preparing a 4.0 mm-thick notched test piece (ordinary test piece) and measuring the notched Charpy impact strength of the test piece in a 23°C environment in accordance with ISO179.

In the measurement of the impact resistance of a test piece prepared from the above-described resin composition, a 4.0 mm-thick test piece prepared from the polycarbonate resin composition based on the ISO179 standard (a test piece composed of the polycarbonate resin composition when the composition does not contain any solvent) is used. A method of preparing a test piece from the polycarbonate resin composition is not particularly restricted, and examples thereof include: a method of melting the resin composition at a temperature of not lower than the temperature at which at least the resin composition is melted, and subsequently molding the thus melted resin composition into a prescribed shape by injection molding, press molding or the like (melting method); and a method of molding the resin composition containing a solvent into a prescribed shape while removing (casting) the solvent by heating at a temperature at which at least the solvent is removed (casting method); however, since the polycarbonate resin composition according to the above-described embodiment is usually melted by heating, the melting method which can stably yield a test piece is preferred.

In the preparation of a test piece by the above-described melting method or casting method, the components constituting the composition (solids in the composition when the composition contains a solvent) and the components constituting the resulting test piece are substantially the same; therefore, the conditions of the test piece preparation have hardly any effect on the impact resistance of the test piece. The same also applies to the below-described other properties.

<Scratch Resistance>

The scratch resistance of the molded product is not particularly restricted, and can be modified as appropriate in accordance with the intended use and, for example, when the molded product is used as an interior material (member) or exterior material (member) of a vehicle (particularly an automobile), the scratch resistance is usually 6.0 N or higher, preferably 8.0 N or higher, more preferably 8.5 N or higher, still more preferably 8.7 or higher, particularly preferably 8.9 or higher, but usually 15.0 N or lower. Particularly, when the molded product is a cured product of the polycarbonate resin composition of the first mode, from the standpoint of ensuring sufficient performance as both an interior member and an exterior material of an automobile, the scratch resistance of the molded product is 8.0 N or higher. The scratch resistance can be improved by increasing the ratio of the styrene-based resin (B).

In the present specification, the scratch resistance is defined as a value obtained by, in accordance with ISO19252, preparing a type A1 multi-purpose test piece conforming to ISO3167 as a sample and measuring the critical normal force of the sample using a scratch tester (e.g., KK-02 manufactured by Kato Tech Co., Ltd.).

In the measurement of the scratch resistance of a test piece prepared from the above-described resin composition, a 4.0 mm-thick test piece prepared from the polycarbonate resin composition based on the ISO19252 standard (a test piece composed of the polycarbonate resin composition when the composition does not contain any solvent) is used. As a method of preparing the test piece composed of the polycarbonate resin composition, the same method as described above in the section of <Impact Resistance> can be applied.

<Transparency>

The transparency L* of the molded product is not particularly restricted, and can be modified as appropriate in accordance with the intended use and, for example, when the molded product is used as an interior material (member) or exterior material (member) of a vehicle (particularly an automobile), the transparency L* of the molded product is usually 45 or less, preferably 40 or less, more preferably 35 or less, still more preferably 30 or less, particularly preferably 25 or less. Particularly, when the molded product is a cured product of the polycarbonate resin composition of the first mode, from the standpoint of ensuring sufficient performance as both an interior member and an exterior material of an automobile, the transparency L* of the molded product is 40 or less. The transparency can be reduced by improving the compatibility of the constituents. It is noted here that a larger value of the transparency L* represents a higher whiteness and thus a lower transparency.

In the present specification, the transparency L* is defined as a value measured in accordance with JIS K7105 for an ISO tensile test piece (4 mm-thick) by a reflection method using a spectrocolorimeter (e.g., SE6000 spectrocolorimeter manufactured by Nippon Denshoku Industries Co., Ltd.).

An increase in the transparency is likely to not only make the color uniform when a dye/pigment is added, but also allow the color of the dye/pigment itself to be expressed and, for example, improve the jet-blackness when a black dye/pigment is added.

In the measurement of the transparency of a test piece prepared from the above-described resin composition, a 4.0 mm-thick test piece prepared from the polycarbonate resin composition based on the ISO tensile test standard (a test piece composed of the polycarbonate resin composition when the composition does not contain any solvent) is used. As a method of preparing the test piece composed of the polycarbonate resin composition, the same method as described above in the section of <Impact Resistance> can be applied.

<Weather Resistance>

The weather resistance of the molded product can be evaluated in terms of the amount of change in the yellow index (YI) before and after a weather resistance test, and the amount of change ΔYI can be modified as appropriate in accordance with the intended use. For example, when the molded product is used as an interior material (member) or exterior material (member) of a vehicle (particularly an automobile), the amount of change ΔYI is usually 5 or more, but usually 40 or less, preferably 30 or less, more preferably 25 or less.

In the present specification, the weather resistance test is performed by treating a sample molded into a size of 90 mm × 50 mm × 2 mm for 1,000 hours using a sunshine weather meter (e.g., manufactured by Suga Test Instruments Co., Ltd.) at a black panel temperature of 63°C with a spraying condition of 12 minutes/60 minutes.

In the present specification, the YI is measured for a plate-shaped test piece by a reflection method using a spectrocolorimeter (e.g., SE6000 spectrocolorimeter, manufactured by Nippon Denshoku Industries Co., Ltd.) in accordance with JIS K7105.

<Use of Molded Product>

The above-described molded product can be used in a wide range of fields, and is useful for various applications, such as electronic/electric device materials and component materials thereof, office automation device materials, information terminal device materials, machine component materials, household electrical appliance materials, interior and exterior materials of vehicles (particularly automobiles), building component materials, various container materials, leisure goods materials, miscellaneous goods materials, and lighting equipment materials. Particularly, the molded product has excellent impact resistance, transparency, and weather resistance; therefore, it is useful as an interior or exterior material of a vehicle (an automobile). Examples of the automobile exterior material mainly include materials of front air dams, door mirrors, pillars, and the like. It is noted here that the word "material" used above may be replaced with "member".

EXAMPLES

The present invention will now be described more concretely by way of Examples and Comparative Examples; however, the present invention is not restricted to the below-described Examples.

<Raw Materials>

[Polycarbonate Resins]

- Polycarbonate resin A1: IUPILON E-2000 (registered trademark, manufactured by Mitsubishi Engineering-Plastics Corporation, a bisphenol A-type aromatic polycarbonate produced by an interfacial polymerization method, Mv: 28,000, terminal hydroxy group content: 150 ppm)
- Polycarbonate resin A2: IUPILON S-3000 (registered trademark, manufactured by Mitsubishi Engineering-Plastics Corporation, a bisphenol A-type aromatic polycarbonate produced by an interfacial polymerization method, Mv: 22,000, terminal hydroxy group content: 150 ppm)
- Polycarbonate resin A1: IUPILON H-4000 (registered trademark, manufactured by Mitsubishi Engineering-Plastics Corporation, a bisphenol A-type aromatic polycarbonate produced by an interfacial polymerization method, Mv: 16,000, terminal hydroxy group content: 100 ppm)

[Styrene-Based Resin]

- Acrylonitrile-styrene resin B: SANREX SAN-C (manufactured by Techno-UMG Co., Ltd., MVR: 22 g/10 min (220°C, 10 kg-load))

[Acrylic Block Copolymers]

- Acrylic block copolymer C1: KURARITY LA2330 (manufactured by Kuraray Co., Ltd., a PMMA-PnBA-PMMA triblock copolymer, Mw: 99,400, Mw/Mn = 1.21, PMMA/PnBA = 20/80 (mass ratio), MFR: 3.7 g/10 min (190°C, 2.16 kg-load))
- Acrylic block copolymer C2: KURARITY LA2250 (manufactured by Kuraray Co., Ltd., a PMMA-PnBA-PMMA triblock copolymer, Mw: 60,300, Mw/Mn = 1.14, PMMA/PnBA = 32/68 (mass ratio), MFR: 25 g/10 min (190°C, 2.16 kg-load))

[Other Resins]

- ABS resin X1: SANTAC UT-61 (manufactured by Nippon A&L Inc.)
- Silicone-based elastomer X2: METABLEN S-2030 (manufactured by Mitsubishi Chemical Corporation, an alkyl methacrylate-alkyl acrylate-dimethyl siloxane copolymer)
- Silicone-based elastomer X3: METABLEN W-600A (manufactured by Mitsubishi Chemical Corporation, an alkyl methacrylate-alkyl acrylate copolymer)

[Stabilizers]

- Stabilizer D1: ADK 2112 (manufactured by ADEKA Corporation, a phosphorus-based heat stabilizer, tris(2,4-di-tert-butylphenyl)phosphite)
- Stabilizer D2: IRGANOX 1010 (manufactured by BASF Ltd., a phenolic stabilizer, pentaerythritol tetrakis[3-(3,5-di-tert-butyl-4-hydroxyphenyl)propionate])

[Mold Release Agents]

- Mold release agent E1: UNISTAR M-9676 (manufactured by NOF Corporation, octadecyl stearate)
- Mold release agent E2: LOXIOL VPG861 (manufactured by Emery Oleochemicals (M) Sdn Bhd, higher fatty acid pentaerythritol ester)

The acrylic block copolymers C1 and C2 are both resins having the above-described structural units (C-1) and (C-2). The structural unit (C-1) has a glass transition temperature of 100°C to 120°C, and the structural unit (C-2) has a glass transition temperature of -50°C to -40°C.

<Production of Resin Pellets>

The above-described raw materials were added in accordance with the respective ratios (mass ratios) shown in Table 1 below, and mixed for 20 minutes using a tumbler mixer to obtain a polycarbonate resin composition. This composition was subsequently supplied to a twin-screw extruder equipped with a vent (TEX25$\alpha$, manufactured by The Japan Steel Works, Ltd.) from a feeder arranged on the upstream, and kneaded at a cylinder temperature of 260°C, an L/D ratio of 52.5, a screw rotation speed of 200 rpm, and a discharge rate of 20 kg/hr, after which the thus extruded molten resin in a strand form was rapidly cooled in a water bath and then pelletized using a pelletizer, whereby pellets of each resin composition of Examples 1 to 9 and Comparative Examples 1 to 5 were obtained.

<Evaluation of Impact Resistance>

The thus obtained pellets were dried at 100°C for at least 5 hours and then injection-molded using an injection molding machine (Model J85AD injection molding machine, manufactured by The Japan Steel Works, Ltd.) at a cylinder temperature of 260°C and a mold temperature of 80°C under the condition of 40-second molding cycle to obtain an ISO tensile test piece (thickness: 4.0 mm). Subsequently, in accordance with ISO179, a 4.0 mm-thick notched test piece (ordinary test piece) was prepared from the ISO tensile test piece, and the notched Charpy impact strength (unit: $kJ/m^2$) was measured in a 23°C environment.

The results of the measurement are shown in Table 1.

<Evaluation of Scratch Resistance>

A type A1 multi-purpose test piece conforming to ISO3167 was prepared in accordance with ISO19252 by applying the same injection conditions as in the above-described evaluation of impact resistance. Subsequently, the critical normal force of this multi-purpose test piece was measured using a scratch tester (KK-02, manufactured by Kato Tech Co., Ltd.) to evaluate the scratch resistance.

The results of the measurement are shown in Table 1.

<Evaluation of Transparency>

An ISO tensile test piece (thickness: 4.0 mm) was injection-molded in the same manner as in the above-described evaluation of impact resistance. Subsequently, in accordance with JIS K7105, the value of L* was measured by a reflection method using a spectrocolorimeter (SE6000 spectrocolorimeter, manufactured by Nippon Denshoku Industries Co., Ltd.).

The results of the measurement are shown in Table 1.

<Evaluation of Weather Resistance>

The above-obtained pellets were dried at 100°C for at least 5 hours and then injection-molded using an injection molding machine (Model J85AD injection molding machine, manufactured by The Japan Steel Works, Ltd.) at a cylinder temperature of 260°C and a mold temperature of 80°C under the condition of 30-second molding cycle to obtain a plate-shaped test piece (90 mm × 50 mm × 2 mm).

Using this plate-shaped test piece, in accordance with JIS K7105, the YI was measured by a reflection method using a spectrocolorimeter (SE6000 spectrocolorimeter, manufactured by Nippon Denshoku Industries Co., Ltd.). The thus obtained value was defined as initial YI.

Subsequently, using a sunshine weather meter (manufactured by Suga Test Instruments Co., Ltd.), the test piece was treated for 1,000 hours at a black panel temperature of 63°C with a spraying condition of 12 minutes/60 minutes, and the YI was measured under the same conditions as described above. The thus obtained value was defined as post-treatment YI.

An amount of change ΔYI was calculated by subtracting the initial YI from the post-treatment YI and used as a value for evaluating the weather resistance. The thus obtained values are shown in Table 1.

[Table 1]

| | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 |
|---|---|---|---|---|---|---|---|---|---|---|---|---|---|---|---|
| Polycarbonate resin | A1 | 52 | 7 | 52 | 33 | 52 | - | 52 | 52 | 52 | - | 52 | - | - | 52 |
| | A2 | 48 | 93 | 48 | 67 | 48 | 83 | 48 | 48 | 48 | 100 | 48 | 83 | 83 | 48 |
| | A3 | - | - | - | - | - | 17 | - | - | - | - | - | 17 | 17 | - |
| Styrene-based resin | B | 37 | 37 | 37 | 37 | 37 | 28 | 43 | 50 | 57 | - | - | 37 | 37 | - |
| Acrylic Block copolymer | C1 | 5.7 | 4.3 | - | - | 2.9 | 14 | 5.7 | 5.7 | 5.7 | - | 5.7 | - | - | 5.7 |
| | C2 | - | - | 5.7 | 4.3 | 2.9 | - | - | - | - | - | - | - | - | - |
| Other resin | X1 | - | - | - | - | - | - | - | - | - | 43 | 37 | - | - | - |
| | X2 | - | - | - | - | - | - | - | - | - | - | - | 5.7 | - | - |
| | X3 | - | - | - | - | - | - | - | - | - | - | - | - | 5.7 | - |
| Stabilizer | D1 | 0.04 | 0.04 | 0.04 | 0.04 | 0.04 | 0.04 | 0.04 | 0.04 | 0.04 | 0.04 | 0.04 | 0.04 | 0.04 | 0.04 |
| | D2 | 0.07 | 0.07 | 0.07 | 0.07 | 0.07 | 0.07 | 0.07 | 0.07 | 0.07 | 0.07 | 0.07 | 0.07 | 0.07 | 0.07 |
| Mold release agent | El | 0.14 | 0.14 | 0.14 | 0.14 | 0.14 | 0.14 | 0.14 | 0.14 | 0.14 | 0.14 | 0.14 | 0.14 | 0.14 | 0.14 |
| | E2 | 0.14 | 0.14 | 0.14 | 0.14 | 0.14 | 0.14 | 0.14 | 0.14 | 0.14 | 0.14 | 0.14 | 0.14 | 0.14 | 0.14 |
| Component C/Component B (mass ratio) | | 0.15 | 0.12 | 0.15 | 0.12 | 0.15 | 0.5 | 0.13 | 0.11 | 0.1 | - | - | - | - | - |
| Impact resistance ($kJ/m^2$) | | 165 | 84 | 95 | 76 | 129 | 215 | 213 | 145 | 94 | 60 | 70 | 53 | 51 | 75 |
| Scratch resistance (N) | | 8.8 | 8.9 | 8.8 | 8.8 | 8.8 | 8.5 | 9.0 | 9.0 | 9.0 | 7.5 | 7.0 | 8.4 | 8.7 | 6.4 |
| Weather res istance ($\Delta$YI) | | 27 | 26 | 26 | 25 | 27 | 29 | 30 | 33 | 35 | 44 | 45 | 30 | 35 | 30 |
| Transparency (L*) | | 36 | 35 | 35 | 34 | 36 | 38 | 36 | 36 | 36 | 31 | 36 | 44 | 42 | 50 |

From the table above, it was found that the resins of Examples 1 to 9 were excellent in all of the properties, which are impact resistance, weather resistance, and transparency; however, as compared to the resins of Examples 1 to 9, the resins of Comparative Examples 1 and 2 in which an ABS resin was incorporated in place of a styrene-based resin had lower impact resistance and weather resistance, and the resins of Comparative Examples 3 and 4 which did not contain an acrylic block copolymer had lower impact resistance and transparency.

Further, it was found that the resins of Examples 1 to 9 and Comparative Examples 3 and 4 which contained a styrene-based resin had a higher scratch resistance than the resins of Comparative Examples 1, 2 and 5 which did not contain a styrene-based resin.

INDUSTRIAL APPLICABILITY

The polycarbonate resin composition according to the present embodiment is useful for various applications, such as electronic/electric device materials and component materials thereof, office automation device materials, information terminal device materials, machine component materials, household electrical appliance materials, interior and exterior materials of automobiles, building component materials, various container materials, leisure goods materials, miscellaneous goods materials, and lighting equipment materials. Particularly, the polycarbonate resin composition according to the present embodiment has excellent impact resistance, transparency, and weather resistance; therefore, it is useful as an exterior material of a vehicle (particularly an automobile), especially as a material used in a front air dam, a door mirror, a pillar or the like, and enables to use these materials in a coating-less manner.

## Claims

**1.** A polycarbonate resin composition, comprising:

a polycarbonate resin (A); and
a styrene-based resin (B) containing no butadiene,
wherein
the content of the styrene-based resin (B) containing no butadiene is 20 parts by mass to 70 parts by mass with respect to 100 parts by mass of the polycarbonate resin (A), and
the following conditions (1) to (3) are satisfied:

(1) the notched Charpy value is 70 $kJ/m^2$ or higher as measured in accordance with the ISO179 standard using a 4.0 mm-thick test piece prepared from the polycarbonate resin composition based on the same standard;
(2) the critical normal force is 8.0 N or higher as measured in accordance with the ISO19252 standard using a test piece prepared from the polycarbonate resin composition based on the ISO3167 (Type A1) standard; and
(3) the L* value is 40 or less as measured in accordance with the JIS K7105-1 standard using a 4.0 mm-thick test piece prepared from the polycarbonate based on the ISO tensile test standard.

**2.** The composition according to claim 1, further comprising an acrylic block copolymer (C) in an amount of 4 parts by mass to 20 parts by mass with respect to 100 parts by mass of the polycarbonate resin (A).

**3.** The composition according to claim 1 or 2, wherein a cured product thereof at a thickness of 2.0 mm has a AYI value of 30 or less after weathering discoloration based on JIS K7105.

**4.** The polycarbonate resin composition according to claim 2 or 3, wherein the acrylic block copolymer (C) is a methacrylate-acrylate-methacrylate triblock copolymer.

**5.** The polycarbonate resin composition according to any one of claims 2 to 4, wherein the content of an alkyl acrylate in the acrylic block copolymer (C) is not less than 50% by mass.

**6.** The polycarbonate resin composition according to any one of claims 2 to 5, wherein the content of the acrylic block copolymer (C) is, in terms of mass ratio, 0.05 to less than 1 with respect to the content of the styrene-based resin (B).

**7.** The polycarbonate resin composition according to any one of claims 1 to 6, wherein the styrene-based resin (B) is an acrylonitrile-styrene resin.

**8.** The polycarbonate resin composition according to any one of claims 2 to 7, wherein the acrylic block copolymer (C) has a weight-average molecular weight of 50,000 to 200,000.

**9.** The polycarbonate resin composition according to any one of claims 2 to 8, wherein the acrylic block copolymer (C) comprises a structural unit represented by the following Formula (C-1) and a structural unit represented by the following Formula (C-2):

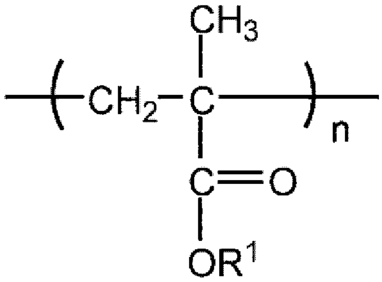

(C-1)

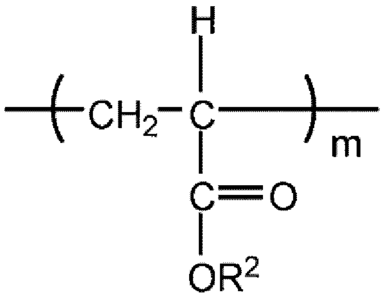

(C-2)

(in Formula (C-1), $R^1$ represents a hydrocarbon group having 1 to 10 carbon atoms, and n represents 10 to 1,000; in Formula (C-2), $R^2$ represents a hydrocarbon group having 1 to 10 carbon atoms, and m represents 10 to 2,000; and
the carbon atoms in $R^1$ and $R^2$ are each optionally substituted with an oxygen atom, a nitrogen atom, or a sulfur atom, and the hydrogen atoms bound to the carbon atoms in $R^1$ and $R^2$ are each optionally substituted with a halogen group).

**10.** The polycarbonate resin composition according to claim 9, wherein

the structural unit (C-1) has a glass transition temperature of 100°C to 120°C, and
the structural unit (C-2) has a glass transition temperature of -50°C to -40°C.

**11.** A molded product, comprising the resin composition according to any one of claims 1 to 10.

**12.** The molded product according to claim 11, which is an interior member for a vehicle or an exterior member for a vehicle.

## INTERNATIONAL SEARCH REPORT

International application No. PCT/JP2020/032330

A. CLASSIFICATION OF SUBJECT MATTER
C08L 25/04(2006.01)i; C08L 53/00(2006.01)i; C08L 69/00(2006.01)i
FI: C08L69/00; C08L25/04; C08L53/00

According to International Patent Classification (IPC) or to both national classification and IPC

B. FIELDS SEARCHED

Minimum documentation searched (classification system followed by classification symbols)
C08L25/00-25/18; C08L53/00; C08L69/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2012-214734 A (UMG ABS, LTD.) 08 November 2012 (2012-11-08) | 1-12 |
| A | WO 2018/180493 A1 (MITSUBISHI ENGINEERING-PLASTICS CORPORATION) 04 October 2018 (2018-10-04) | 1-12 |
| A | JP 2017-171810 A (MITSUBISHI ENGINEERING-PLASTICS CORPORATION) 28 September 2017 (2017-09-28) | 1-12 |
| A | JP 2013-112781 A (TEIJIN CHEMICALS LTD.) 10 June 2013 (2013-06-10) | 1-12 |
| A | JP 2011-256305 A (FUJI XEROX CO., LTD.) 22 December 2011 (2011-12-22) | 1-12 |
| A | JP 2016-771 A (FUJI XEROX CO., LTD.) 07 January 2016 (2016-01-07) | 1-12 |
| A | JP 2000-154329 A (KANEGAFUCHI CHEM IND CO., LTD.) 06 June 2000 (2000-06-06) | 1-12 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 November 2020 (05.11.2020) | 17 November 2020 (17.11.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/032330

C (Continuation). DOCUMENTS CONSIDERED TO BE RELEVANT

| Category* | Citation of document, with indication, where appropriate, of the relevant passages | Relevant to claim No. |
|---|---|---|
| A | CN 104910340 A (ZHEJIANG UNIVERSITY) 16 September 2015 (2015-09-16) | 1-12 |

Form PCT/ISA/210 (continuation of second sheet) (January 2015)

**INTERNATIONAL SEARCH REPORT**
Information on patent family members

International application No. PCT/JP2020/032330

| Patent Documents referred in the Report | Publication Date | Patent Family | Publication Date |
|---|---|---|---|
| JP 2012-214734 A | 08 Nov. 2012 | US 2013/0345362 A1<br>WO 2012/133190 A1<br>EP 2692754 A1<br>AU 2012234110 A<br>CA 2829059 A<br>CN 103443154 A<br>KR 10-2014-0000324 A<br>MX 2013011214 A<br>HK 1188231 A | |
| WO 2018/180493 A1 | 04 Oct. 2018 | JP 2019-135290 A<br>JP 2019-135291 A<br>CN 110139899 A | |
| JP 2017-171810 A | 28 Sep. 2017 | (Family: none) | |
| JP 2013-112781 A | 10 Jun. 2013 | (Family: none) | |
| JP 2011-256305 A | 22 Dec. 2011 | (Family: none) | |
| JP 2016-771 A | 07 Jan. 2016 | US 2015/0361261 A1 | |
| JP 2000-154329 A | 06 Jun. 2000 | (Family: none) | |
| CN 104910340 A | 16 Sep. 2015 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017078273 A
- JP 2015078284 A
- JP 2013147651 A